# EUROPEAN PATENT SPECIFICATION

(11) **EP 2 644 830 B1**
(45) Date of publication and mention of the grant of the patent: **24.02.2016**
(21) Application number: 12186088.6
(22) Date of filing: 26.09.2012
(51) Int. Cl.: F01D 5/14

(54) **Noise reduction in a turbomachine, and a related method thereof**
Geräuschverminderung in einer Turbomaschine und zugehörige Verfahren dafür
Réduction de bruit dans une turbomachine et procédé associé

(30) Priority: 28.09.2011 US 201113247096
(43) Date of publication of application: 02.10.2013
(73) Proprietor: General Electric Company, Schenectady, NY 12345 (US)
(72) Inventor: Ramakrishnan, Kishore, Niskayuna, NY New York 12309 (US); Wood, Trevor Howard, Niskayuna, NY New York 12309 (US)
(74) Representative: Williams, Andrew Richard

(56) References cited:
- GB-A- 2 402 978
- US-A- 6 139 259
- US-A1- 2004 197 187
- US-A1- 2009 317 237

## Description

### BACKGROUND

The invention relates generally to turbomachines and, more particularly, to arrangement of blades in turbomachines so as to reduce noise during operation.

Gas turbine engine manufacturers are faced with the problem of developing new ways of effectively reducing noise. One of the common noise sources includes noise generated by the turbomachinery within the gas turbine engine. The turbomachinery noise results from a relative motion of adjacent sets of blades, typical of those found in compressors (including fans) and turbines. For example, a compressor comprises multiple bladed stages, each stage including a rotatable blade row and possibly a stationary blade row. It has long been recognized that in turbomachines one of the principal noise sources is the interaction between the wakes of upstream blades and downstream blades during operation. This wake interaction results in noise at the upstream blade passing frequency and at its harmonics, as well as broadband noise covering a wide spectrum of frequencies.

One of the commonly used methods to reduce the wake interaction noise is to increase the axial spacing between adjacent sets of blades. This modification provides space for the wake to dissipate before reaching the downstream set of blades, resulting in less noise. However, increased spacing of blades in turbomachines increases axial length of the machine leading to more weight, aerodynamic performance losses, and/or installation and space requirements.

Therefore, an improved means of reducing the wake interaction noise is desirable.

US 2009/0317237 A1 relates to a system and method for reduction of unsteady pressures in turbomachinery and discloses features generally corresponding to the preamble of claim 1 herein.

### BRIEF DESCRIPTION

A turbomachine is provided in accordance with claim appended claims.

Also disclosed herein is a non-claimed method which includes rotating a first set of blades relative to a second set of blades disposed downstream relative to the first set of blades. The first set of blades includes a first subset of blades and a second subset of blades. Each blade among the first subset of blades includes one or more first geometric parameters. Each blade among the second subset of blades includes one or more second geometric parameters different from the one or more first geometric parameters. The method further includes impacting a first wake generated by the first subset of blades with the second set of blades. The method also includes impacting a second wake generated by the second subset of blades with the second set of blades such that the spectral content of wake excitation perceived, and an acoustic signal generated by the second set of blades is altered.

Also disclosed herein is a further non-claimed method, which includes rotating one set of blades relative to another set of blades disposed upstream relative to the one set of blades. The other set of blades includes a first subset of blades and a second subset of blades. Each blade among the first subset of blades includes one or more first geometric parameters. Each blade among the second subset of blades includes one or more second geometric parameters different from the one or more first geometric parameters. The method further includes impacting a first wake generated by the first subset of blades with the one set of blades. The method also includes impacting a second wake generated by the second subset of blades with the one set of blades such that spectral content of wake excitation perceived, and an acoustic signal generated by the one set of blades is altered.

### DRAWINGS

These and other features, aspects, and advantages of the present invention will become better understood when the following detailed description is read with reference to the accompanying drawings in which like characters represent like parts throughout the drawings, wherein:
FIG. 1 is diagrammatical illustration of a turbomachine, for example a gas turbine engine having an exemplary blade arrangement in accordance with an exemplary embodiment of the present invention;
FIG. 2 is a schematic top view of a two-dimensional cross-section of a first set of blades and a second set of blades in a turbomachine, in accordance with an exemplary embodiment of the present invention;
FIG. 3 is a schematic top view of a two-dimensional cross-section of a first set of blades and a second set of blades in a turbomachine, in accordance with an exemplary embodiment of the present invention; and
FIG. 4 is a schematic top view of a two-dimensional cross-section of a first set of blades and a second set of blades in a turbomachine, in accordance with an exemplary embodiment of the present invention.

### DETAILED DESCRIPTION

As discussed in detail below, embodiments of the invention include a system and method for reduction of wake interaction noise in apparatus such as turbomachines or the like. As used herein, the system and method are applicable to various types of applications having blade-wake interactions resulting in unsteady pressure. Further, the term 'unsteady pressure' as used herein refers to air unsteady pressures and acoustics as well as blade surface unsteady pressure that are also referred to as 'aeromechanical loading'. Non-limiting examples of such turbomachine applications include compressors, turbojets, turbofans, turboshafts, turbo propulsion engines, aircraft engines, gas turbines, steam turbines, wind turbines, or water/hydro turbines.

The embodiments of the present invention are beneficial by allowing the designer the freedom to both redistribute and reduce acoustic energy emitted by the system.

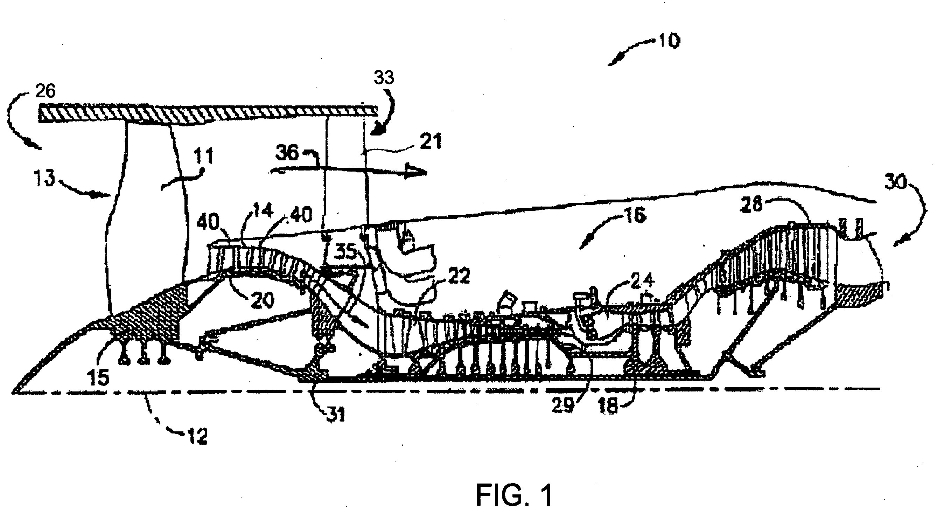

FIG. 1 is a partial schematic illustration of an exemplary gas turbine engine assembly 10 having a centerline axis 12. In the exemplary embodiment, engine assembly 10, includes a fan assembly 13, a booster compressor 14, a gas turbine engine 16, and a low-pressure turbine 28 that is coupled to the fan assembly 13 and the booster compressor 14. The fan assembly 13 includes a plurality of rotor fan blades 11 that extend substantially radially outward from a fan rotor disk 15, as well as a plurality of stator vanes 21 that are positioned downstream of the fan blades 11. The gas turbine engine 16 includes a high-pressure compressor 22, a combustor 24, and a high-pressure turbine 18. The booster compressor 14 includes a plurality of rotor blades 40 that extend substantially radially outward from a compressor rotor disk 20 coupled to a first drive shaft 31. The compressor 22 is coupled to the high-pressure turbine 18 via a second drive shaft 29. The engine assembly 10 also includes an intake side 26, an engine exhaust side 30, and a fan exhaust side 33.

During operation, air entering the engine 10 through the intake side 26 is compressed by the fan assembly 13. The airflow exiting fan assembly 13 is split such that a portion 35 of the airflow is channeled into the booster compressor 14 and a remaining portion 36 of the airflow bypasses the booster compressor 14 and the turbine engine 16, and exits the engine 10 through the fan exhaust side 33. The bypass airflow portion 36 flows past and interacts with the stators vanes 21 creating unsteady pressures on the stator vane surfaces, as well as in the surrounding airflow that radiate as acoustic waves. The plurality of rotor blades 40 compress and deliver the compressed airflow portion 35 towards the gas turbine engine 16. The airflow portion 35 is further compressed by the high-pressure compressor 22 and is delivered to the combustor 24. The airflow portion 35 from the combustor 24 drives the rotating turbines 18 and 28, and exits engine 10 through the engine exhaust side 30.

In one embodiment, the compressor or turbine stages may be disposed along an axial direction. In another embodiment, the compressor or turbine stages are disposed along a radial direction. In yet another embodiment, the compressor or turbine stages may be disposed along both radial and axial directions. It should be noted herein that although a gas turbine engine assembly is disclosed herein, the exemplary system and method are applicable to various types of applications having blade-wake interactions resulting in unsteady pressure.

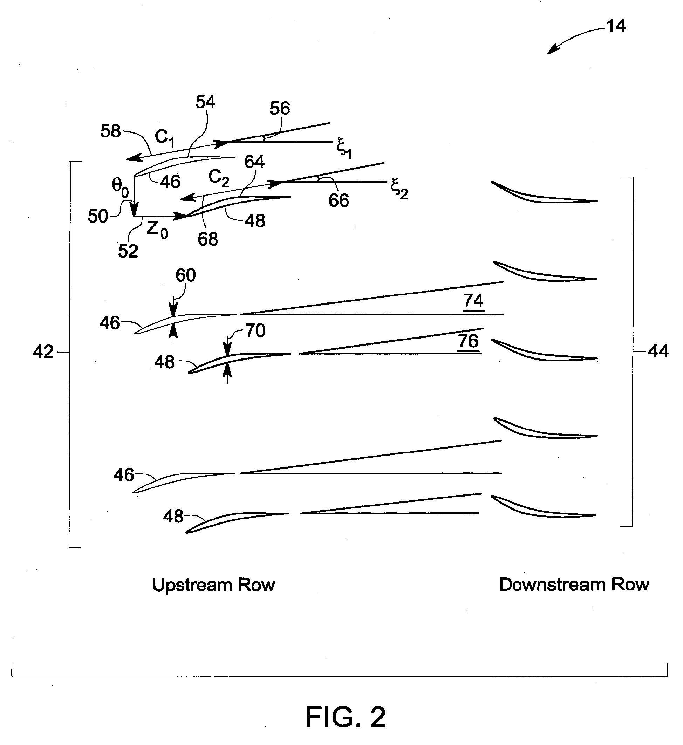

FIG. 2 is a schematic illustration of an exemplary first set of blades 42 and a second set of blades 44 located in the fan 11, for example in the turbomachine system 10 of FIG. 1. As illustrated, the second set of blades 44 are disposed downstream of the first set of blades 42. In other embodiments, the first set of blades 42, and the second set of blades 44 may be located in the booster 14, the compressor 22, or the turbine 18, 28.

In one embodiment, the first set of blades 42 includes rotatable blades and the second set of blades 44 includes stationary blades. In another embodiment, the first set of blades 42 includes stationary blades and the second set of blades 44 includes rotatable blades. In yet another embodiment, both the first set of blades 42 and the second set of blades 44 include rotatable and contra-rotating blades. In the illustrated embodiment, the first set of blades 42 includes a first subset of blades 46 and a second subset of blades 48. It should be noted that in other embodiments, the first set of blades 42 may include more than two subset of blades. The second subset of blades 48 are disposed offset along a circumferential direction 50 and an axial direction 52 relative to the first subset of blades 46.

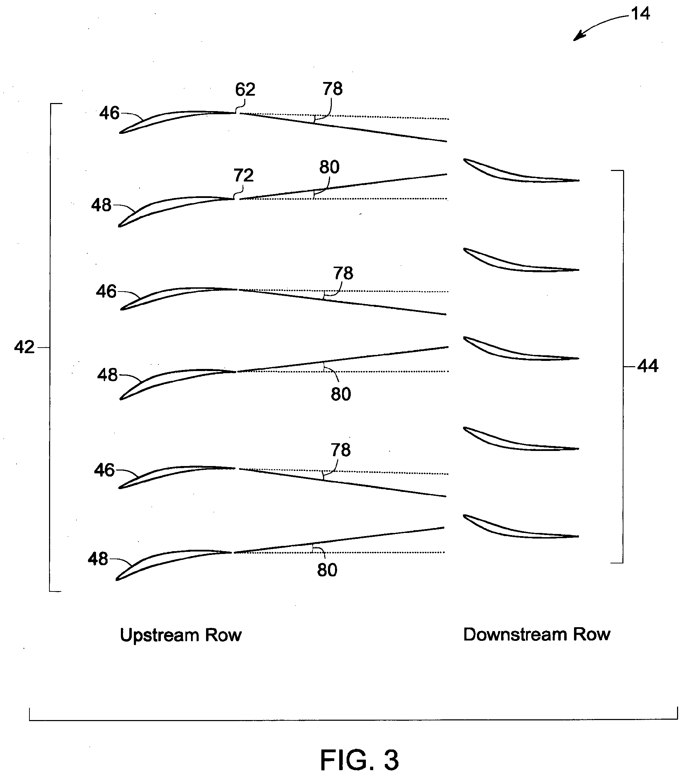

In the illustrated embodiment, each blade among the first subset of blades 46 includes a plurality of first geometric parameters. The plurality of first geometric parameters includes a camber 54, a stagger 56, a chord 58, a blade thickness 60, and a trailing edge camber angle 62 (shown in FIG. 3) of each blade among the first subset of blades 46. Each blade among the second subset of blades 48 includes a plurality of corresponding second geometric parameters different from the first geometric parameters. The plurality of second geometric parameters includes a camber 64, a stagger 66, a chord 68, a blade thickness 70, and a trailing edge camber angle 72 (shown in FIG. 3) of each blade among the first subset of blades 46. It should be noted herein that the first and second geometric parameters may additionally include sweep and dihedral of the first subset of blades 46 and the second subset of blades 48.

The first and second geometric parameters may be varied depending on the application. In one embodiment, the chord 68 of the second subset of blades 48 may be varied relative to the chord 58 of the first subset of blades 46. In another embodiment, an "inclination angle" relative to axial direction referred to as the stagger 66 of the second subset of blades 48 may be varied relative to the stagger 56 of the first subset of blades 46. In yet another embodiment, "curvature of the blade" referred to as the camber 64 of the second subset of blades 48 may be varied relative to the camber 54 of the first subset of blades 46. In yet another exemplary embodiment, the blade thickness 70 of the second subset of blades 48 may be varied relative to the blade thickness 60 of the first subset of blades 46. In yet another exemplary embodiment, the trailing edge camber angle 72 (shown in FIG. 3) of the second subset of blades 48 may be varied relative to the trailing edge camber angle 62 of the first subset of blades 46.

As has been previously discussed, one of the principal sources of unsteady pressure in the turbomachine is the interaction between wakes of the first set of blades 42 and the second set of blades 44, moving relative to each other. As is well understood, the wake is defined as the region of reduced momentum behind an airfoil evidenced by the aerodynamic drag of the blade.

In the illustrated embodiment of FIG. 2, if the first set of blades 42 is rotated relative to the second set of blades 44, the first subset of blades 46 shed a first wake 74 that is impacted by the second set of blades 44. Additionally, the second subset of blades 48 shed a second wake 76 that is impacted by the second set of blades 44. However, if the second subset of blades 48 are disposed offset along the circumferential direction 50 and the axial direction 52 relative to the first subset of blades 46, the wake interaction with the second set of blades 44 will occur at different and non-uniformly distributed instants of time. In other words, the first subset of blades 46 and the second subset of blades 48 are spaced optimally such that the spectral content of the wake excitation perceived by the second set of blades 44, and acoustic waves resulting from such an interaction are altered to produce less overall noise, as described below. It should be noted herein that in the illustrated embodiment spectral content of the wake excitation perceived by the second set of blades 44, and acoustic waves resulting from such an interaction are altered compared to a scenario in which spectral content of the wake excitation perceived by the second set of blades 44, and acoustic waves resulting from such an interaction when the entire first set of blades 42 have the same geometric parameters. In another embodiment, the first subset of blades 46 and the second subset of blades 48 may be optimally spaced to reduce unsteady surface pressure loads on the second set of blades 44. Additionally, variation in corresponding geometric parameters of the first subset of blades 46 and the second subset of blades 48 also alters spectral content of wake excitation perceived by the second set of blades 44 to produce less overall noise. It should also be noted herein that an acoustic signal from the second set of blades 44 is the resultant of all the wakes from the first set of blades 42. In some embodiments, the second set of blades 44 is counter rotated relative to the first set of blades 42.

FIG. 3 is a schematic illustration of the exemplary first set of blades 42 and the second set of blades 44 in the turbomachine system 10. The second set of blades 44 are disposed downstream of the first set of blades 42. In the illustrated exemplary embodiment, the trailing edge camber angle 72 of the second subset of blades 48 may be varied relative to the trailing edge camber angle 62 of the first subset of blades 46.

It should be noted herein that variation in the trailing edge camber angle 62, 72 of the first and second subset of blades 46, 48 contributes to slightly different airflow exit angles 78, 80 such that the wake arrival time at the downstream blade row leading edges are non-uniformly distributed and the acoustic waves resulting from the interaction radiate less coherently to produce less overall noise.

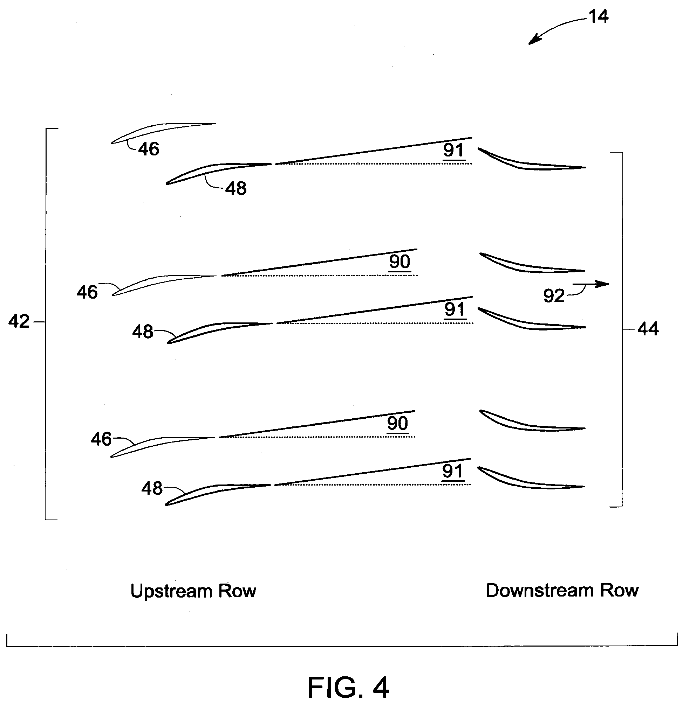

FIG. 4 is a schematic illustration of the exemplary first set of blades 42 and the second set of blades 44 similar to the embodiment of FIG. 2. As illustrated, the second set of blades 44 are disposed downstream of the first set of blades 42. In the illustrated embodiment, the first set of blades 42 includes stationary blades and the second set of blades 44 includes rotatable blades.

If the second set of blades 44 is rotated relative to the first set of blades 42, the first subset of blades 46 shed a first wake 90 that is impacted by the second set of blades 44. Additionally, the second subset of blades 48 shed a second wake 91 that is impacted by the second set of blades 44. However, if the second subset of blades 48 are disposed offset along the circumferential direction 50 and the axial direction 52 relative to the first subset of blades 46, the wake interaction with the second set of blades 44 will occur at different and non-uniformly distributed instants of time. In other words, the first subset of blades 46 and the second subset of blades 48 are spaced optimally such that the spectral content of the wake excitation perceived by the second set of blades 44, and an acoustic signal 92 resulting from such an interaction are altered to produce less overall noise. Additionally, variation in corresponding geometric parameters of the first subset of blades 46 and the second subset of blades 48 also alters spectral content of wake excitation perceived by the second set of blades 44 to produce less overall noise.

The various embodiments discussed herein for reduction of unsteady pressure in turbomachinery thus provide a convenient and efficient means to reduce aerodynamic noise and/or aeromechanical loading caused by interaction of wakes between sets of blades moving relative to each other. The technique provides non-uniform spacing between blades in the upstream set of blades resulting in a reduction in unsteady blade loading that also results in reduced noise signals and/or a noise field that superimposes in a way to reduce peak noise signals. In other words, noise reduction can be accomplished by altering the spacing of the wakes generated from the upstream blade row in a non-uniform way so as to redistribute the spectral content of the wake excitation perceived by the downstream blade row. This has the effect of reducing/redistributing the spectral content of the unsteady loading on the downstream airfoils, thereby reducing the airfoil structural response and/or the noise generated. The variation in geometric parameters also contributes to the overall noise reduction.

Furthermore, the skilled artisan will recognize the interchangeability of various features from different embodiments. For example, the first set of blades may include a third subset of blades described with respect to one embodiment may include a geometric variation of at least one of a camber, a stagger, a chord, a blade thickness, and a trailing edge camber angle relative to a first subset and a second subset of blades described with respect to another. Similarly, the various features described, as well as other known equivalents for each feature, can be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the scope of the claims.

## Claims

1. A turbomachine (11, 14, 22, 18, 28), comprising:
a first, upstream, set of blades (42) and a second, downstream, set of blades (44),
the first and second sets of blades being rotatable relative to one another;
**characterized in that**:
the first, upstream, set (42) of blades comprises:
a first subset (46) of blades, wherein each blade among the first subset of blades comprises one or more first geometric parameters (54, 56, 58,60, 62); and
a second subset (48) of blades, wherein each blade among the second subset of blades comprises one or more second geometric parameters (64, 66, 68, 70, 72) different from the one or more first geometric parameters; whereby
a first wake (74, 90) generated by the first subset (46) of blades impacts with the second, downstream, set (44) of blades; and
a second wake (76, 91) generated by the second subset (48) of blades impacts with the second, downstream, set (44) of blades such that spectral content of wake excitation perceived, and an acoustic signal (92) generated by the second, downstream, set (44) of blades is altered.

2. The apparatus (11, 14, 22, 18, 28) of claim 1, wherein the second subset (48) of blades are disposed offset along a circumferential direction (50) and an axial direction (52) relative to the first subset (46) of blades.

3. The apparatus (11, 14, 22, 18, 28) of either of claim 1 or 2, wherein the first, upstream, set of blades (42) comprises a plurality of rotatable blades and the second, downstream, set of blades (44) comprises a plurality of stationary blades.

4. The apparatus (11, 14, 22, 18, 28) of either of claim 1 or 2, wherein the first, upstream, set of blades (42) comprises a plurality of stationary blades and the second, downstream, set of blades (44) comprises a plurality of rotatable blades.

5. The apparatus (11, 14, 22, 18, 28) of any preceding claim, wherein the first, upstream, set (42) of blades are counter rotatable relative to the second, downstream, set (44) of blades.

6. The apparatus (11, 14, 22, 18, 28) of any preceding claim, wherein the one or more first geometric parameters comprise at least one of a camber (54), a stagger (56), a chord (58), a blade thickness (60), a trailing edge camber angle (62), blade sweep, and a blade dihedral.

7. The apparatus (11, 14, 22, 18, 28) of any preceding claim, wherein the one or more second geometric parameters comprises at least one of a camber (64), a stagger(66), a chord (68), a blade thickness (70), a trailing edge camber angle (72), blade sweep, and a blade dihedral.

## Patentansprüche

1. Turbomaschine (11, 14, 22, 18, 28), umfassend:
einen ersten, stromaufwärtigen Satz Schaufeln (42) und einen zweiten, stromabwärtigen Satz Schaufeln (44), wobei der erste und zweite Satz Schaufeln in Bezug zueinander drehbar sind;
**dadurch gekennzeichnet, dass**:
der erste, stromaufwärtige Satz Schaufeln (42) Folgendes umfasst:
einen ersten untergeordneten Satz (46) Schaufeln, wobei jede Schaufel des ersten untergeordneten Satzes Schaufeln einen oder mehr erste geometrische Parameter (54, 56, 58, 60, 62) umfasst; und
einen zweiten untergeordneten Satz (48) Schaufeln, wobei jede Schaufel des zweiten untergeordneten Satzes Schaufeln einen oder mehr zweite geometrische Parameter (64, 66, 68, 70, 72) umfasst, die von dem einen oder mehr ersten geometrischen Parametern abweichen; wobei
ein erster Nachstrom (74, 90), der durch den ersten untergeordneten Satz (46) Schaufeln erzeugt ist, auf den zweiten, stromabwärtigen Satz (44) Schaufeln auftrifft; und
ein zweiter Nachstrom (76, 91), der durch den zweiten untergeordneten Satz (48) Schaufeln erzeugt ist, auf den zweiten, stromabwärtigen Satz (44) auftrifft, sodass ein wahrgenommener Nachstromerregungsspektralgehalt und ein akustisches Signal (92), die durch den zweiten, stromabwärtigen Satz (44) Schaufeln erzeugt werden, verändert wird.

2. Vorrichtung (11, 14, 22, 18, 28) nach Anspruch 1, wobei der zweite untergeordnete Satz (48) Schaufeln entlang einer Umfangsrichtung (50) und einer axialen Richtung (52) bezüglich des ersten untergeordneten Satzes (46) Schaufeln versetzt angeordnet ist.

3. Vorrichtung (11, 14, 22, 18, 28) nach einem der Ansprüche 1 oder 2, wobei der erste, stromaufwärtige Satz (42) Schaufeln mehrere drehbare Schaufeln umfasst und der zweite, stromabwärtige Satz (44) Schaufeln mehrere ortsfeste Schaufeln umfasst.

4. Vorrichtung (11, 14, 22, 18, 28) nach einem der Ansprüche 1 oder 2, wobei der erste, stromaufwärtige Satz (42) Schaufeln mehrere ortsfeste Schaufeln umfasst und der zweite, stromabwärtige Satz (44) Schaufeln mehrere drehbare Schaufeln umfasst.

5. Vorrichtung (11, 14, 22, 18, 28) nach einem der vorhergehenden Ansprüche, wobei der erste, stromaufwärtige Satz (42) Schaufeln bezüglich des zweiten, stromabwärtigen Satzes (44) Schaufeln gegendrehend ist.

6. Vorrichtung (11, 14, 22, 18, 28) nach einem der einem der vorhergehenden Ansprüche, wobei der eine oder mehr erste geometrische Parameter zumindest eines von Folgendem umfasst: eine Wölbung (54), eine Staffelung (56), eine Sehne (58), eine Schaufelstärke (60), einen Hinterkantensturz (62), Schaufelschwung und einen Schaufelzweiflach.

7. Vorrichtung (11, 14, 22, 18, 28) nach einem der einem der vorhergehenden Ansprüche, wobei der eine oder mehr zweite geometrische Parameter zumindest eines von Folgendem umfasst: eine Wölbung (64), eine Staffelung (66), eine Sehne (68), eine Schaufelstärke (70), einen Hinterkantensturz (72), Schaufelschwung und einen Schaufelzweiflach.

## Revendications

1. Turbomachine (11, 14, 22, 18, 28), comprenant :
un premier ensemble amont d'aubes (42) et un second ensemble aval d'aubes (44), les premier et second ensembles d'aubes pouvant tourner l'un par rapport à l'autre ;
**caractérisée en ce que** :
le premier ensemble amont (42) d'aubes comprend :
un premier sous-ensemble (46) d'aubes, dans lequel chaque aube du premier sous-ensemble d'aubes comprend un ou plusieurs premiers paramètres géométriques (54, 56, 58, 60, 62) ; et
un second sous-ensemble (48) d'aubes, dans lequel chaque aube du second sous-ensemble d'aubes comprend un ou plusieurs seconds paramètres géométriques (64, 66, 68, 70, 72) différents des un ou plusieurs premiers paramètres géométriques, de sorte que :
un premier sillage (74, 90) généré par le premier sous-ensemble (46) vienne heurter le second ensemble aval (44) d'aubes ; et que
un second sillage (76, 91) généré par le second sous-ensemble (48) d'aubes vienne heurter le second ensemble aval (44) d'aubes si bien que le contenu spectral de l'excitation de sillage sera perçu et qu'un signal acoustique (92) généré par le second ensemble aval (44) d'aubes sera modifié.

2. Appareil (11, 14, 22, 18, 28) selon la revendication 1, dans lequel le second sous-ensemble (48) d'aubes est disposé décalé le long d'une direction circonférentielle (50) et d'une direction axiale (52) par rapport au premier sous-ensemble (46) d'aubes.

3. Appareil (11, 14, 22, 18, 28) selon l'une ou l'autre des revendications 1 et 2, dans lequel le premier ensemble amont (42) d'aubes comprend une pluralité d'aubes rotatives et le second ensemble aval (44) d'aubes comprend une pluralité d'aubes fixes.

4. Appareil (11, 14, 22, 18, 28) selon l'une ou l'autre des revendications 1 et 2, dans lequel le premier ensemble amont (42) d'aubes comprend une pluralité d'aubes fixes et le second ensemble aval (44) d'aubes comprend une pluralité d'aubes rotatives.

5. Appareil (11, 14, 22, 18, 28) selon l'une quelconque des revendications précédentes, dans lequel le premier ensemble amont (42) d'aubes a une rotation antagoniste par rapport au second ensemble aval (44) d'aubes.

6. Appareil (11, 14, 22, 18, 28) selon l'une quelconque des revendications précédentes, dans lequel les un ou plusieurs premiers paramètres géométriques comprennent au moins l'un(e) d'une courbure (54), d'un échelonnement (56), d'une corde (58), d'une épaisseur d'aube (60), d'un angle de courbure de bord de fuite (62), d'un déport d'aube et d'un dièdre d'aube.

7. Appareil (11, 14, 22, 18, 28) selon l'une quelconque des revendications précédentes, dans lequel les un ou plusieurs seconds paramètres géométriques comprennent au moins l'un(e) d'une courbure (64), d'un échelonnement (66), d'une corde (68), d'une épaisseur d'aube (70), d'un angle de courbure de bord de fuite (72), d'un déport d'aube et d'un dièdre d'aube.
